# EUROPEAN PATENT SPECIFICATION

(11) **EP 1 155 252 B1**
(45) Date of publication and mention of the grant of the patent: **21.04.2004**
(21) Application number: 00928104.9
(22) Date of filing: 15.02.2000
(51) Int. Cl.: F16L 21/08, F16L 47/08

(54) **METHOD TO REMOVE LEAKAGE PROBLEMS IN PIPES PRODUCED FROM PLASTIC-BASE MATERIALS**
VERFAHREN ZUR LÖSUNG VON LECKAGEPROBLEMEN IN AUF KUNSTSTOFFBASIS HERGESTELLTEN ROHREN
PROCEDE PERMETTANT D'ELIMINER LES PROBLEMES DE FUITE DANS DES TUYAUX FABRIQUES A PARTIR DE MATIERES PLASTIQUES

(30) Priority: 16.02.1999 TR 9900322
(43) Date of publication of application: 21.11.2001
(73) Proprietor: Dizayn Teknik Plastik Boru ve Elemanlari San.Ve Tic. A.S., 34860 Istanbul (TR)
(72) Inventor: MIRMAHMUTOGULLARI, Adil, Cekmece 34860 Istanbul (TR); MIRMAHMUTOGULLARI, Ibrahim, 16140 Bursa (TR); BEYENAL, Sacit, 16140 Bursa (TR); TEKE, Ismail, 16140 Bursa (TR); KOYUN, Ahmed, 16140 Bursa (TR); KOC, Yavuz, 16140 Bursa (TR)
(74) Representative: Beyer, Andreas, Dr.
(86) International application number: PCT/TR2000/000003
(87) International publication number: WO 2000/049324

(56) References cited:
- WO-A1-98/25066
- AT-B- 329 941
- GB-A- 2 003 243
- GB-A- 2 292 780

## Description

Plastic-base pipes are used in gardens, fields, where plastic-base irrigation systems are found. In the presently applied technique, male and female heads are mounted to pipe by the methods of friction-welding, butt-welding, tight coupling or cementing.

By eliminating friction-welding, but-welding, tight coupling and cementing, leakage caused by the present techniques will be prevented and problems encountered in shaping plastic-base material will be removed by the production technology to be selected:

There are numerous embodiments proposing various pipe connections for securing thereof. Including these GB-A-2 292 780 referenced application discloses a pipe connection comprising a muff / female section having a socket for housing a gasket and a pipe collapsing means, and an external metal located on the socket for holding the collapsing means as collapsed.

Another application AT-B-329 941 discloses an embodiment having a damp for engaging the subsequent pipe. The damp is located on a choke area extending through the end part.

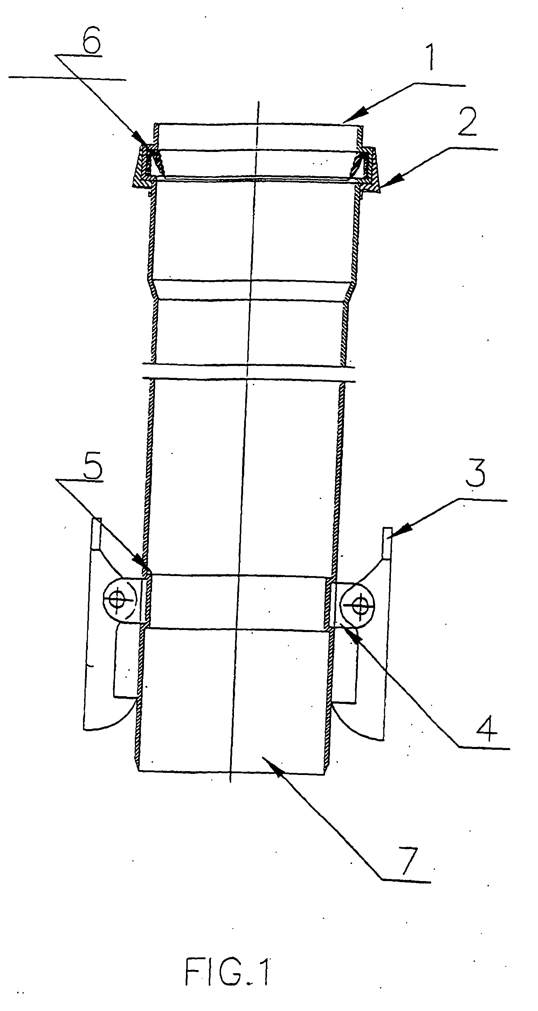

The Fig.1 illustrates the parts of the embodiment in accordance to the present invention.

Muff Section (Female section) (1): This is the region in which male section of the incoming pipe is inserted.

Metal Covering on gasket groove (2) : Gasket groove found in the muff section is covered by a metal jacket to protect from any damage.

Coupling Section (with latch or clamp) (3): It is the place the existing latch or damp system is applied.

Choke Area Metal Ring (4) : Metal ring placed on the choke area and designed separately for latch or clamp-coupling.

Choke Area (5) : It is the choke area made on the pipe by a special technique for the metal ring not to move out.

Gasket (6) : It is a rubber gasket, durable and water-proof in muff section.

Pipe Section (male section) (7) : Pipe section introducing into muff section with a bevel-edge.

In the scope of the invention as seen from the Fig. 1, Gasket groove is covered by a metal covering (2) so that preceding pipe can engage to the metal covering (2) by means of the damp or latch (3). Furthermore, said metal covering (2) is located on the gasket groove to preclude any gasket displacement thereof.

As mentioned above the metal ring (4) is placed on the choke area (5) for holding the damp at a fixed position. Placing such a metal ring on the choke area (5) is the difference that is not encountered over the prior art.

## Claims

1. Plastic-base pipes and connection means thereof for irrigation systems a muff / female section having a socket for housing a gasket and a pipe connecting means, and an external metal located on the socket for holding the connecting means as connected; and a choke area provided at the end portion of the pipe opposed to the muff section and holding a clamp **characterized in that** said external metal (2) is embodied on the gasket (6) for engaging by the clamp (3) being located on the preceding pipe and for precluding the said gasket (6) displacements, and a choke area metal ring (4) covered on the choke area (5) so that the said damp (3) is disposed thereon.

## Patentansprüche

1. Rohre auf Kunststoffbasis und ihre Verbindungseinrichtung für Bewässerungssysteme, mit einem weiblichen Muffenabschnitt, der einen Sockel zur Aufnahme einer Dichtung und eine Rohrverbindungseinrichtung aufweist, und einem auf dem Sockel angeordneten äußeren Metallteil zum Halten der Verbindungseinrichtung in verbundenem Zustand, und einem an dem dem Muffenabschnitt entgegengesetzten Endabschnitt des Rohres vorhandenen, eine Klemme tragenden Einschnürungsbereich, **dadurch gekennzeichnet, dass** das äußere Metallteil (2) auf der Dichtung (6) zum Ineingriffkommen mit der Klemme (3), die sich am vorhergehenden Rohr befindet, und zum Verhindern eines Verrutschens der Dichtung (6) ausgebildet ist, und dass ein Einschnürungsbereichmetallring (4) sich auf dem Einschnürungsbereich (5) befindet, derart, dass die Klemme (3) darauf angeordnet ist.

## Revendications

1. Tuyaux en matière plastique et moyens de connexion de ceux-ci destinés à des systèmes d'irrigation comprenant une section à manchon/femelle possédant un socle pour le logement d'une garniture d'étanchéité et des moyens de connexion de tuyaux, ainsi qu'une pièce métallique externe située sur le socle pour le maintien des moyens de connexion tels que connectés ; et une zone d'étranglement ménagée à la partie d'extrémité du tuyau opposée à la section à manchon et maintenant une bride, **caractérisés en ce que** ladite pièce de métal externe (2) est incorporée sur la garniture d'étanchéité (6) pour être engagée par la bride (3) étant située sur le tuyau précédent et pour exclure les déplacements de ladite garniture d'étanchéité (6), et une bague métallique de la zone d'étranglement (4) couverte sur la zone d'étranglement (5) de telle sorte que ladite bride (3) soit disposée dessus.
